Europäisches Patentamt

**European Patent Office**

Office européen des brevets

(11) Veröffentlichungsnummer: **0 103 825**
**B1**

(12) # EUROPÄISCHE PATENTSCHRIFT

(45) Veröffentlichungstag der Patentschrift:
01.07.87

(51) Int. Cl.⁴: **F 16 D 3/19, F 16 D 3/10**

(21) Anmeldenummer: **83106915.6**

(22) Anmeldetag: **15.09.78**

(54) **Elastische Kupplung.**

(30) Priorität: **21.09.77 DE 2742442**

(43) Veröffentlichungstag der Anmeldung:
**28.03.84 Patentblatt 84/13**

(45) Bekanntmachung des Hinweises auf die Patenterteilung:
**01.07.87 Patentblatt 87/27**

(84) Benannte Vertragsstaaten:
**BE CH FR GB LI LU NL SE**

(56) Entgegenhaltungen:
**DE-B-1 283 607**
**DE-B-1 299 949**
**DE-B-2 135 589**
**FR-A-1 059 414**
**GB-A-438 478**
**US-A-1 435 141**
**US-A-2 701 456**
**US-A-2 737 033**
**US-A-3 473 349**
**US-A-4 047 395**

(73) Patentinhaber: **Balcke- Dürr AG, Homberger Strasse 2 Postfach 1240, D-4030 Ratingen 1 (DE)**

(72) Erfinder: **Fickelscher, Kurt G., Herderstrasse 19, D-671 Frankenthal (DE)**

(74) Vertreter: **Klose, Hans, Dipl.- Phys., Kurfürstenstrasse 32, D-6700 Ludwigshafen (DE)**

LIBER, STOCKHOLM 1987

EP 0 103 825 B1

**Beschreibung**

Die Erfindung betrifft eine elastische Kupplung mit zwei auf Wellenenden angeordneten gleichartigen Zahnrädern sowie mit einem die beiden Zahnräder überdeckenden Kupplungszahnkranz welcher an einer Innenfläche oder Außenfläche einer Hülse anliegt und dessen Kupplungszähne aus einem Blech gebildet sind, welches entsprechend der Gestalt der Zahnlücken der Zahnräder gebogen ist und in die Zahnlücken eingreift, wobei die Kupplungszähne und die Zähne der Zahnräder die gleiche Winkelteilung sowie ebene Zahnflanken aufweisen und wobei die Zahnreihen der Zahnräder in axialer Richtung nebeneinander liegen.

In der US-A-14 35 141 ist eine elastische Kupplung beschrieben, deren Kupplungszahnkranz eine Hülse aufweist, in welcher die Kupplungszähne aus gewelltem Blech gehalten sind. Die in axialer Richtung nebeneinander liegenden Zahnreihen der beiden Zahnräder weisen einen vergleichsweisen großen axialen Abstand zueinander auf, um eine Biegung der Zähne zu ermöglichen. Die Biegebeanspruchung der aus Blech bestehenden Zähne ist mit einem entsprechenden Verschleiß verbunden. Das dieser Kupplung zugrundeliegende Prinzip erfordert einen relativ großen axialen Abstand der Zahnräder und folglich ein großes Bauvolumen. Der Flankenwinkel der Zähne der Zahnräder ist gering, und bei Belastung oder einer Belastungsänderung erfolgt die genannte Biegebeanspruchung und keine radiale Bewegung der Kupplungszähne. Drehschwingungen und Drehstöße werden praktisch ungedämpft von der einen auf die andere Kupplungshälfte übertragen; eine durch Reibkräfte bedingte Dämpfungswirkung ist nicht vorhanden.

Ferner ist aus der US-A-27 01 456 eine elastische Kupplung bekannt, bei welcher die Kupplungszähne aus einem gewellten Blech gefertigt sind und an der Innenfläche der Hülse anliegen. Die Hülse weist zwei in axialen Richtung beabstandete Ringflächen auf, an welchen die Kupplungszähne mit ihren axialen Stirnflächen anliegen. Der Kupplungszahnkranz ist folglich fest in die Hülse eingespannt. Bei Belastung werden die Kupplungszähne deformiert und insbesondere tordiert, wobei die aneinander liegenden Flächenbereiche verkleinert werden und eine erhöhte Flächenpressung zwischen Kupplungszähnen und den Zähnen der Zahnräder gegeben ist. Eine radiale Bewegung der Kupplungszähne kann bei Belastungsänderung nicht eintreten. Die feste Einspannung der Kupplungszähne in der Hülse verhindert eine radiale Bewegung der Kupplungszähne. Zwar wird aufgrund der erläuterten Einspannung des Kupplungszahnkranzes eine koaxiale Ausrichtung der Wellenenden erreicht, doch es ist der zulässige Verdrehwinkel zwischen den beiden Wellen entsprechend klein. Die Hülse besteht aus zwei mittels Schrauben axial verbundenen Teilen und muß insgesamt vergleichsweise massiv ausgebildet sein, um die Kupplungszähne ordnungsgemäß einzuspannen. Die hierdurch bedingte relativ große Gesamtmasse ist vor allem bei schnelldrehenden Maschinen nachteilig. Auch die Fertigung und der Zusammenbau der verschiedenen Einzelteile erfordert einen vergleichsweise großen Aufwand bei entsprechend hohen Fertigungskosten.

Der Erfindung liegt die Aufgabe zugrunde, eine elastische Kupplung der eingangs genannten Art dahingehend weiterzubilden, daß bei geringem Bauvolumen ein hohes Drehmoment übertragbar ist und eine gute Dämpfung erreicht wird.

Zur Lösung dieser Aufgabe wird vorgeschlagen, daß der Flankenwinkel der Zähne der Zahnräder größer ist als der Reibungswinkel (kg $\rho$ = $\mu$), so daß bei einer Belastungsänderung die Kupplungszähne mit ihren Zahnflanken an den anliegenden Zahnflanken in radialer Richtung gleiten.

Die vorgeschlagene elastische Kupplung zeichnet sich durch einen einfachen Aufbau aus, und die bei Belastungsänderung sich ergebenden Gleitbewegungen ergeben eine gute Dämpfung von Drehschwingungen oder Anfahrstößen oder dergleichen. Da der Flankenwinkel der Zähne der Zahnräder größer ist als der Reibungswinkel $\rho$, wobei der Gleitwert $\mu$ gleich dem Tangens des Reibungswinkels ist, können die Kupplungszähne bei Belastungsänderung an den Zahnflanken der Zahnräder gleiten, wobei praktisch keine Deformation der Zahnflanken der Kupplungszähne erfolgt. Eine Deformation erfolgt lediglich im Bereich vom Zahngrund der Kupplungszähne, die an der Hülse anliegen. Die Dämpfungscharakteristik kann durch Abstimmung von Flankenwinkel und Reibungswinkel vorgegeben werden. Die Hülse kann als einfacher zylindrischer Drehkörper mit geringer Masse ausgebildet sein. Die Zähne der Zahnräder liegen axial nahe bei einander, und die Kupplungszähne werden bei Belastung praktisch nicht auf Biegung sondern im wesentlichen auf Scherung beansprucht und behalten ihre achsparallele Ausrichtung bei. Bei Belastung werden die Flanken der Kupplungszähne gegeneinander verschoben, wobei die eine Zahnflanke eines Kupplungszahnes an dem ersten Zahnrad und die andere Zahnflanke an dem zweiten Zahnrad anliegt. Ist die Hülse in radialer Richtung elastisch verformbar, so erfolgt bei Belastung eine radiale Dehnung, und die Kupplungszähne weichen entsprechend in radialer Richtung aus. Die Hülse kann ferner im wesentlichen steif ausgebildet sein; bei Belastung erfolgt eine elastische Verformung der Kupplungszähne im Bereich vom Zahngrund, wobei im übrigen eine flächige Anlage an den ebenen Zahnflanken der Zahnräder bestehen bleibt. Bei einer Verringerung der Belastung geht die Verformung im Bereich des Zahngrundes wieder zurück. Die Elastizität der Kupplung ist bei einer steif ausgebildeten Hülse zwar geringer als bei einer elastischen Hülse, doch findet gleichwohl ein Gleiten der Kupplungszähne an den Zahnflanken der Zahnräder statt. Durch Vorgabe der Elastizität sowohl der Hülse als auch der Kupplungszähne sowie des Flankenwinkels und des Reibungswinkels läßt sich sehr exakt das Dämpfungsverhalten der Kupplung vorgeben. Die Kupplung ermöglicht ohne weiteres eine Zentrierung der miteinander zu verbindenden Wellen. Zusätzlich kann die Federung im Bereich des axialen Spaltes zwischen den axial nahe beieinander liegenden Zahnrädern zur Elastizität einen Anteil beitragen.

In einer besonderen Ausführungsform ist die Zahnreihe des Kupplungszahnkranzes als ein Zick-Zack-Blech ausgebildet. Die Fertigung eines derartigen Kupplungszahnkranzes ist kostengünstig durchführbar. Ferner können bei einer Demontage die miteinander gekuppelten Wellen bzw. Maschinen zunächst ihre Ausrichtung beibehalten, da lediglich die Hülse in axialer Richtung abgezogen und nachfolgend das offene Zick-Zack-Blech aus den Zähnen der Zahnräder herausgelöst werden muß.

In einer weiteren Ausführungsform weist die Zahnreihe des Kupplungszahnkranzes Fehlstellen auf. Diese Fehlstellen sind zweckmäßig in regelmäßiger Folge über den Umfang verteilt angeordnet. Die Elastizität des Kupplungszahnkranzes kann vor allem bei einer bogenförmigen Ausgestaltung im Bereich dieser Fehlstelle erhöht werden.

An Hand der in der Zeichnung dargestellten Ausführungsbeispiele wird nachfolgend die Erfindung näher erläutert. Es zeigen:

Fig. 1 einen axialen Längsschnitt durch eine obere Hälfte einer Kupplung,

Fig. 2 einen Schnitt entlang Schnittlinie II, gemäß Fig. 1,

Fig. 3-5 die Anordnung eines hier schematisch dargestellten einzelnen Zahnes des Kupplungszahnkranzes zwischen benachbarten Zähnen der Zahnräder,

Fig. 6 eine Ansicht in axialer Richtung auf zwei axial nebeneinander liegende Zahnräder,

Fig. 7 eine Ausführungsform ähnlich Fig. 1, wobei der Kupplungszahnkranz Fehlstellen aufweist,

Fig. 8 eine axiale Ansicht einer Kupplung mit Versatz der beiden Zahnräder,

Fig. 9 vergrößert ein Detail aus Fig. 8 zur Erläuterung des Versatzes der Zahnräder,

Fig. 10 teilweise einen Schnitt durch eine Ausführungsform einer Kupplung, bei welcher die Zahnkränze der beiden Zahnräder ebenfalls als Zick-Zack-Bleche ausgebildet sind,

Fig. 11 eine weitere Ausführungsform ähnlich Fig. 10,

Fig. 12 teilweise einen axialen Längsschnitt durch eine Ausführungsform, bei welcher die Zahnräder eine Innenverzahnung aufweisen, und

Fig. 13 einen Schnitt entlang Schnittlinie XIII gemäß Fig. 12.

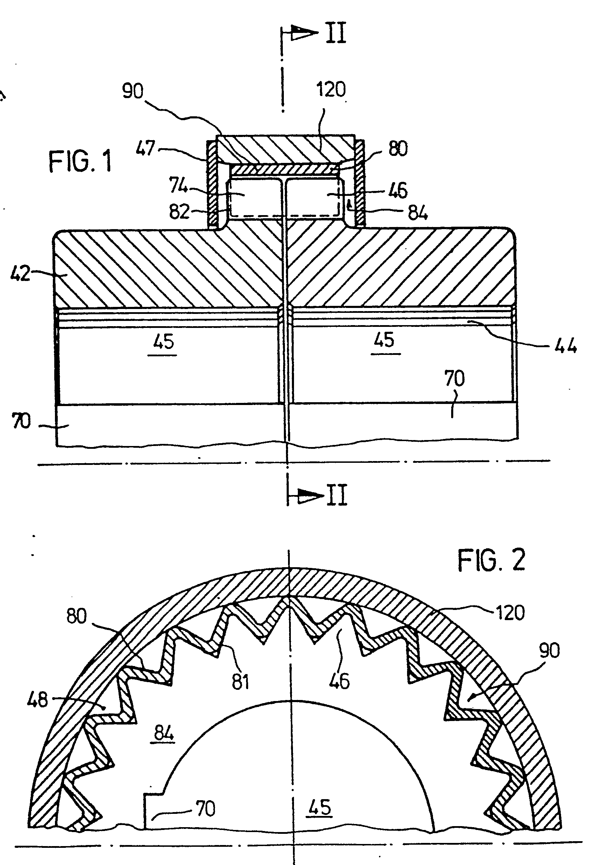

Gemäß Fig. 1 und 2 enthält die elastische Kupplung einen innenverzahnten Kupplungszahnkranz 90 und zwei außenverzahnte gleichartige Zahnräder 82, 84. Die Zahnräder 82, 84 enthalten Zähne 46 und 74, die auf zwei Kupplungsnaben 44, 42 angeordnet sind. Diese Kupplungsnaben 44, 42 sind zur Befestigung auf hier nicht weiter dargestellten Wellenenden jeweils mit einer Bohrung 45 sowie mit Faßfedernuten 70 versehen. Die Zahnräder sind mit ihren Längsachsen fluchtend und unmittelbar nebeneinander angeordnet und übereinstimmend ausgebildet. Ein Kupplungszahnkranz 90 steht mittels Kupplungszähnen mit den Zähnen 46, 74 der beiden Zahnräder in Eingriff. Der Kupplungszahnkranz 90 ist in axialer Richtung etwa gleich groß wie die gemeinsame axiale Erstreckung der Zähne 46 und 74 der beiden Zahnräder 82, 84. Der Kupplungszahnkranz 90 ist von einer kreisringförmigen Hülse 120 umgeben, die in axialer Richtung etwas länger ist als der Kupplungszahnkranz 90. Die Hülse 120 besteht aus Metall, beispielsweise Stahl, und der Kupplungszahnkranz 90 ist durch ein Zick-Zack-Blech 80 gebildet. An den axialen Enden der Hülse 120 ist jeweils ein radial nach innen sich erstreckender Ring 47 angeordnet, der das Eindringen von Schmutz und das Austreten von Schmiermittel verhindert und ferner eine axiale Sicherung der Hülse 120 ergibt.

In Fig. 2 ist die Hülse 120 und der radial innen eingesetzte Kupplungszahnkranz 90 mit den Kupplungszähnen 48 zu erkennen. Zacken 81 des Zick-Zack-Bleches 80 bilden die Kupplungszähne 48, die in die Zahnlücken der Zahnräder 82 und 84 eingreifen. Das Zick-Zack-Blech 80 besteht aus elastischem, federnden Material, z. B. Stahl, und als Richtwert für die Dicke können 1 bis 5 mm, vorzugsweise 2 bis 3 mm, gelten. Sämtliche Zähne weisen ein dreieckförmiges Profil und ebene Zahnflanken auf, wobei die Zahnspitzen ggfs. abgerundet sind.

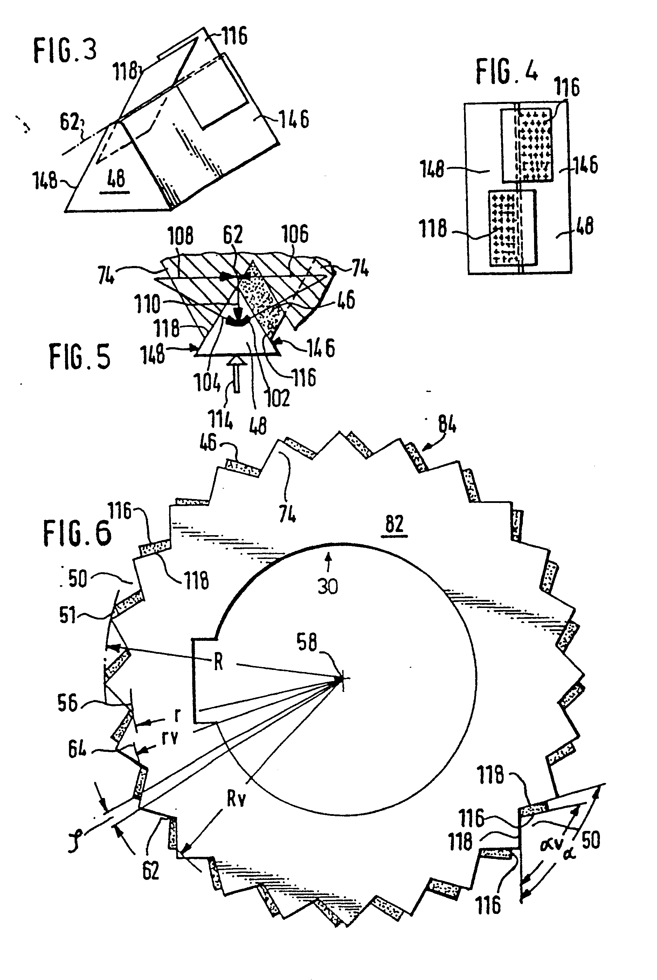

Fig. 3 zeigt einen Kupplungszahn 48 und das Zusammenwirken mit den Zahnrädern, deren Zähne nur durch die Zahnflanken 116 bzw. 118 angedeutet sind. An den Zahnflanken 146 bzw. 148 des Kupplungszahnes 48 liegen die Zahnflanken 116 bzw. 118 an. Die beiden Zahnflanken 116 und 118 bilden miteinander eine "virtuelle Zahnlücke", deren Spitze durch die Linie 62 angedeutet ist. Aus Gründen der übersichtlicheren Darstellung ist der Kupplungszahn 48 in den Fig. 3 bis 5 als ein massiver Zahn dargestellt, obwohl er aus einem gebogenen Blech besteht und im Inneren hohl ist. Die genannten Zahnflanken sind eben, und der Flankenwinkel des Kupplungszahnes 48 ist größer als der Reibungswinkel.

Fig. 4 zeigt eine Aufsicht in Richtung auf die Spitze des Kupplungszahnes 48, wobei die am Kupplungszahn anliegenden Bereiche der Zahnflanken 116 bzw. 118 mit Kreuzchen versehen sind.

In Fig. 5 sind zwei Zähne 74 des einen, hier vorderen, Zahnrades im Schnitt dargestellt. Es sei davon ausgegangen, daß die Kupplung belastet wird und, wie nachfolgend noch zu erläutern sein wird, die beiden Zahnräder um ihre Achsen um einen Verdrehwinkel verdreht sind. Von dem anderen, hier hinter der Zeichenebene liegenden Zahnrad ist der Zahn 46 zu erkennen, der zwecks besserer Verdeutlichung punktiert dargestellt ist.

Wird die Kupplung nicht von einem Drehmoment belastet, so befindet sich der Zahn 46 hinter dem in der Zeichnung rechts dargestellten Zahn 74 des vorderen Zahnrades. Aufgrund der Belastung wurde die Form der virtuellen Zahnlücke verändert mit der Folge, daß der Kupplungszahn 48 in die dargestellte Position nach außen gedrückt wurde. Die Zähne 46 und 74 wirken auf den Kupplungszahn 48 mit den durch die Pfeile 102 und 104 angedeuteten Kräften. Diese Kräfte sind in die tangentialen Komponenten 106, 108 einerseits und in die radiale Komponente 110 andererseits zerlegt. Die tangentialen Komponenten 106 sind einander entgegengerichtet und heben sich in der Praxis weitgehend auf mit der Folge, daß der Kupplungszahn 48 praktisch keine Kräfte in Umfangsrichtung zu übertragen hat. Da die Zähne der beiden Zahnräder in axialer Richtung dicht aneinanderliegen, wirken auf den Kupplungszahn im wesentlichen Scherkräfte und praktisch keine Biegebeanspruchungen. Der Kupplungszahn 48 und folglich der Kupplungszahnkranz kann daher dünn und elastisch ausgebildet sein, und die Kupplung ist gleichwohl zur Übertragung von sehr hohen Drehmomenten bei einer hohen Lebensdauer geeignet. Da der Flankenwinkel größer als der Reibungswinkel ist, kann der Kupplungszahn, wie dargestellt, bei Belastung seinen Zahnflanken 146, 148 auf den Zahnflanken 116, 118 in radialer Richtung gleiten. Der radialen Kraftkomponente 110 entgegen wirkt die hier nicht dargestellte Hülse, und zwar in Richtung des Pfeiles 114 zur Spitze 62 der virtuellen Zahnlücke. Die Hülse kann elastisch verformbar sein, so daß bei Belastung eine radiale Dehnung erfolgen kann. Die Hülse kann aber auch relativ starr ausgebildet sein, wobei die radialen Bewegungen der Kupplungszähne durch die elastische Ausbildung des Kupplungszahnkranzes 90 ermöglicht wird. Bei Belastung der Kupplung wird nämlich der Kupplungszahnkranz gegen die Hülse gestaucht, wobei eine elastische Verformung in dem Anlagebereich an der Hülse erfolgt.

Fig. 6 zeigt eine Ansicht in axialer Richtung der beiden Zahnräder 82, 84 bei Belastung der Kupplung mit einem Drehmoment. Die Zahnräder 82 und 84 sind um einen Verdrehwinkel $\varphi$ gegeneinander verdreht. In die virtuellen Zahnlücken 50 greifen die hier nicht dargestellten Kupplungszähne. Die Spitzen 62 dieser virtuellen Zahnlücken liegen auf einem "virtuellen Fußkreis" 64 mit dem Radius rv. Es sind ferner relativ kleine virtuelle Zahnlücken 51 zu erkennen, deren Spitzen auf einem Radius Rv liegen und welche bei Zurücknahme der Belastung verschwinden. Die Spitzen der Zähne 74 liegen auf einem Kreis mit dem Radius R, während der Fußkreis 56 den Radius r aufweist. Das Zahnrad 82 weist radial innen einen massiven Grundkörper 30 auf, welcher radial außen mit den Zähnen 74 versehen ist. Die virtuelle Zahnlücke 50 weist einen Flankenwinkel $\alpha$ v auf, welcher kleiner ist als der Zahnflankenwinkel $\alpha$ der Zähne 82 oder 84. Entsprechend der Belastung ändert sich der Flankenwinkel der virtuellen Zahnlücke 50. Der aus einem Zick-Zack-Blech bestehende Kupplungszahnkranz ermöglicht ohne weiteres die Anpassung der Kupplungszähne an den jeweiligen Winkel der virtuellen Zahnlücken derart, daß eine flächenhafte Anlage an den Zahnflanken der Kupplungszähne gegeben ist. Im Bereich der Zahnspitzen der Kupplungszähne erfolgt eine elastische Federung. Bei elastischer Ausbildung der Hülse wird die Gesamtelastizität der Kupplung auch durch jene beeinflußt. Zusätzlich kann die elastische Torsion der Kupplungszähne 48 im Spalt zwischen den beiden Kupplungshälften einen Anteil zur Elastizität der Kupplung beitragen. Drehschwingungen oder Drehstöße zwischen den mittels der Kupplung verbundenen Maschinen werden gedämpft, wobei die Dämpfungscharakteristik entsprechend der Zähnezahl und dem Flankenwinkel vorgegeben werden kann. Die radiale Verschiebung und das Gleiten der Kupplungszähne auf den ebenen Zahnflanken der Zahnräder wird durch die elastische Ausbildung des Kupplungszahnkranzes 90 und ggfs. auch der Hülse 120 ermöglicht.

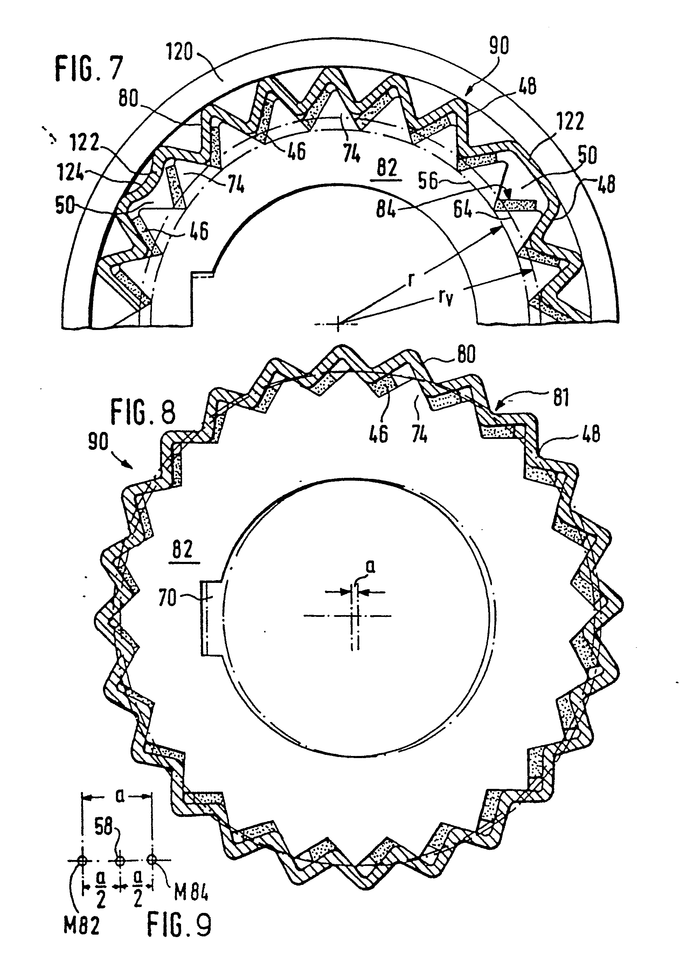

Fig. 7 zeigt eine axiale Ansicht, wobei aus Gründen der besseren Übersichtlichkeit der Kupplungszahnkranz 90 mit dem Zick-Zack-Blech 80 schraffiert dargestellt ist. Die Kupplung sei wiederum mit einem Drehmoment belastet, so daß die beiden Zahnräder 82, 84 gegeneinander entsprechend verdreht sind. Die Hülse 120 weist eine hinreichende Elastizität auf und das Zick-Zack-Blech 80 ist in radialer Richtung nach außen gedrückt. Es sei angemerkt, daß zur Verdeutlichung der Zusammenhänge die radiale Verdrängung des Zick-Zack-Bleches 80 entsprechend der Differenz Rv-r zur Verdeutlichung der Zusammenhänge stark vergrößert dargestellt ist. Bei dieser Ausführungsform enthält der Kupplungszahnkranz 90 Fehlstellen 122, an welchen keine Kupplungszähne in die zugeordnete Zahnlücke eingreifen. Zur Bildung einer solchen Fehlstelle 122 im rechten Teil von Fig. 7 ist das Zick-Zack-Blech 80 an der Innenseite der Hülse 120 über die virtuelle Zahnlücke 50 hinweggeführt, die somit frei bleibt. Im linken Teil von Fig. 7 ist die Fehlstelle 122 durch einen Bogen 124 gebildet, der radial nach innen gerichtet ist, ohne hierbei die Zahnflanken der Zahnräder zu berühren. Durch diese Ausführungsform kann die Elastizität des Zick-Zack-Bleches 80 erhöht werden. Die Fehlstellen 122 werden in regelmäßiger Folge über den Umfang angeordnet.

In Fig. 8 sind die beiden Zahnräder 82 und 84 mit ihren Mittelpunkten M 82 und M 84 um einen Versatz a gegeneinander versetzt dargestellt. Die das Zick-Zack-Blech 80 umgebende Hülse ist hier nicht dargestellt. Der Fußkreis der virtuellen Zahnlücken bleibt hierbei kreisrund. Die Zähne 46 des hinter der Zeichenebene liegenden Zahnrades sind punktiert angedeutet, soweit sie nicht durch die Zähne 74 des vorderen Zahnrades 82 verdeckt sind. Aufgrund des Versatzes a sind die Zähne 46 auf der linken Seite der Zeichnung weniger sichtbar als auf der rechten Seite. Wie in Verbindung mit Fig. 9 ersichtlich, halbiert der Mittelpunkt 58 des Fußkreises der virtuellen Zahnlückenreihe den genannten Versatz. Der Versatz a ist also an den Zähnen nur mit der halben Größe zu bemerken. Der Kupplungszahnkranz 90 führt zwar beim Umlauf eine Radialbewegung durch, jedoch nur um die Hälfte des Versatzes a. Dies hat zur Folge, daß die Rückstellkräfte, die auf die Lagerung der hier nicht dargestellten Wellen der Kupplungshälften wirken, entsprechend reduziert und die Schwingungsanregungen halbiert werden. Die Flanken der Kupplungszähne gleiten auf den zugeordneten Zahnflanken der Zahnräder 82, 84 somit einerseits aufgrund der Belastung der Kupplung und andererseits aufgrund des Versatzes a der Wellen. Bei großer Antriebsleistung wird eine Fett- oder Ölschmierung vorgesehen, die auch zur Kühlung dienen kann.

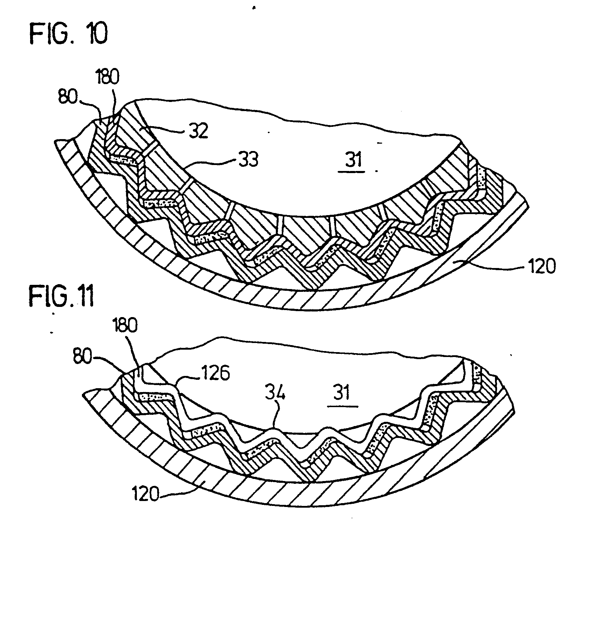

Fig. 10 zeigt eine Ausführungsform der Kupplung, bei welcher die Zahnräder keine Kupplungsnaben aufweisen. Vielmehr sind auf jeder der zu kuppelnden Wellen 31 keilförmige Elemente 32 aufgelegt, die beispielsweise aus Metall bestehen und deren Innenflächen 33 jeweils an der Außenfläche der zugehörenden Welle 31 glatt anliegen. Die Zahnreihen der Zahnräder werden jeweils durch ein Zick-Zack-Blech 180 gebildet. Das Zick-Zack-Blech 180 ist geschlossen und mit Vorspannung über die keilförmigen Elemente 32 gelegt, die zur Montage auf die Welle 31 geklebt sein können. Das Zick-Zack-Blech 180 ist zu einem Ring geschlossen. Bei dieser Ausführungsform ist keinerlei Bearbeitung der Welle 31 erforderlich, da die keilförmigen Elemente 32 durch Reibungsschluß die Drehmomentübertragung ermöglichen.

Fig. 11 zeigt eine ähnliche Ausführung wie Fig. 10, jedoch ohne keilförmige Elemente. Stattdessen sind in der Welle 31 abgerundete Kerben 126 vorgesehen, in welche die nach innen gerichteten Kanten 34 des Zick-Zack-Bleches 180 eingreifen. Die Tiefe der Kerben 126 ist derart vorgegeben, daß bei den auftretenden Drehmomenten das Zick-Zack-Blech 180 nicht aus den Kerben 126 herausgerissen wird. Werden hingegen die Kerben 126 derart vorgegeben, daß bei einer bestimmten Belastung das Zick-Zack-Blech 180 aus den Kerben 126 heraustreten kann, so ist eine Sicherheitskupplung geschaffen, welche eine Trennung der gekuppelten Wellen beim Erreichen eines bestimmten Drehmomentes ermöglicht.

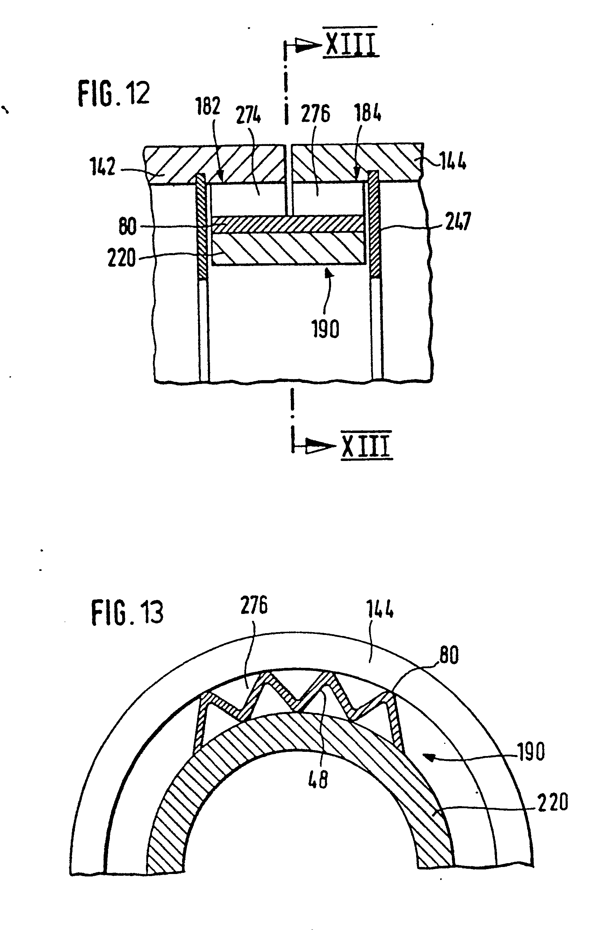

Fig. 12 und 13 zeigen eine Ausführungsform der Kupplung mit innenverzahnten Zahnrädern 182, 184. Die Kupplungsnaben 142, 144 oder die miteinander zu kuppelnden Wellen sind hohl ausgebildet und weisen an ihren Enden radial nach innen gerichtete Zähne 274, 276 auf. Innerhalb der derart ausgebildeten Zahnräder 182, 184 ist der außenverzahnte Kupplungszahnkranz 190 angeordnet, welcher aus einem Zick-Zack-Blech 80 besteht, das in die Zahnlücken der genannten Zahnräder eingreift. Nach innen ist dieses Zick-Zack-Blech auf der ringförmigen Hülse 220 abgestützt, die ggfs. elastisch verformbar ist. Auch könnten die Kupplungsnaben 142, 144 radial federnd, also elastisch ausgebildet sein, um eine zusätzliche Federbeaufschlagung der Zähne zu erhalten. Zum Schutz gegen das Eindringen von Schmutz oder Staub sowie zur axialen Führung der Hülse 220 sind in umlaufenden Nuten der Kupplungsnaben 142, 144 Ringe 247 eingesetzt. Bei dieser Ausführungsform wird die Hülse 220 durch den Kupplungszahnkranz 190 im Gegensatz zu den vorstehend erläuterten Ausführungsbeispielen in radialer Richtung nicht nach außen sondern nach innen belastet.

**Patentansprüche**

1. Elastische Kupplung mit zwei auf Wellenenden angeordneten gleichartigen Zahnrädern (82, 84; 182, 184), sowie mit einem die beiden Zahnräder überdeckenden Kupplungszahnkranz (90; 190), welcher an einer Innenfläche oder Außenfläche einer Hülse (120; 220) anliegt und dessen Kupplungszähne (48) aus einem Blech gebildet sind, welches entsprechend der Gestalt der Zahnlücken der Zahnräder (82, 84; 182, 184) gebogen ist und in die Zahnlücken eingreift, wobei die Kupplangszähne (48) und die Zähne der Zahnräder (82, 84; 182, 184) die gleiche Winkelteilung sowie ebene Zahnflanken aufweisen und wobei die Zahnreihen der Zahnräder (82, 84; 182, 184) in axialer Richtung nebeneinander liegen, dadurch gekennzeichnet, daß der Flankenwinkel der Zähne der Zahnräder (82, 84; 182, 184) größer ist als der Reibungswinkel (tg ρ = μ), so daß bei einer Belastungsänderung die Kupplungszähne (48) mit ihren Zahnflanken (148, 146) an den anliegenden Zahnflanken (118, 116) in radialer Richtung gleiten.

2. Kupplung nach Anspruch 1, dadurch gekennzeichnet, daß die Kupplungszähne (48) von außen in die Zahnlücken der Zahnräder (82, 84) eingreifen (Fig. 1 bis 11).

3. Kupplung nach Anspruch 1, dadurch gekennzeichnet, daß die Kupplungszähne (48) von innen in die Zahnlücken der Zahnräder (182, 184) eingreifen (Fig. 12 und 13).

4. Kupplung nach Anspruch 1, 2 oder 3, dadurch gekennzeichnet, daß die Zahnreihe des Kupplungszahnkranzes (90) als Zick-Zack-Blech (80) ausgebildet ist.

5. Kupplung nach Anspruch 1, 2, 3 oder 4, dadurch gekennzeichnet, daß die Zahnreihe des Kupplungszahnkranzes (90) Fehlstellen (122) aufweist (Fig. 7).

6. Kupplung nach Anspruch 5, dadurch gekennzeichnet, daß die Fehlstellen (122) äquidistant angeordnet sind.

7. Kupplung nach Anspruch 1, 2, 3, 4, 5 oder 6, dadurch gekennzeichnet, daß die Zahnreihe mindestens eines Zahnrades (82, 84) von einem Zick-Zack-Blech (180) gebildet ist, das auf der zugeordneten Welle (31) oder Kupplungsnabe drehfest befestigt ist (Fig. 10 oder 11).

8. Kupplung nach Anspruch 7, dadurch gekennzeichnet, daß das Zick-Zack-Blech (180) geschlossen ist und zur Befestigung mit Vorspannung auf die Welle (31) beziehungsweise Kupplungsnabe gebracht ist, wobei zwischen dem Zick-Zack-Blech (180) und der Welle (31) beziehungsweise Kupplungsnabe keilförmige Elemente (32) angeordnet sind, deren Profil jeweils den Zahnlücken des Zick-Zack-Bleches (180) und der Oberfläche der Welle (31) beziehungsweise Kupplungsnabe angepaßt ist (Fig. 10).

9. Kupplung nach Anspruch 7, dadurch gekennzeichnet, daß die Welle (31) beziehungsweise die Kupplungsnabe auf der Oberfläche sich in axialer Richtung erstreckende abgerundete Kerben (126) aufweist, in denen die kanten (34) des Zick-Zack-Bleches (180) sitzen (Fig. 11).

**Claims**

1. Elastic coupling comprising two similar gear wheels (82, 84; 182, 184) mounted on shaft ends and a coupling toothed rim (90; 190) covering the two gear wheels and placed on an internal surface or external surface of a sleeve (120; 220), the coupling teeth (48) of which rim are formed by a metal sheet which is bent into the shape of the gaps between the teeth of the gear wheels (82, 84; 182, 184) and fits into the gaps, the coupling teeth (48) and the teeth of the gear wheels (82, 84; 182, 184) having the same angular division and plane tooth flanks and the rows of teeth of the two gear wheels (82, 84; 182, 184) lying side by side in the axial direction, characterised in that the angle enclosed by the flanks of the teeth of the gear wheels (82, 84; 182, 184) is greater than the angle of friction (tg $\rho = \mu$) so that when there is a change in stress the flanks (148, 146) of the coupling teeth (48) slide over the adjacent tooth flanks (118, 116) in the radial direction.

2. Coupling according to claim 1, characterised in that the coupling teeth (48) fit into the gaps between the teeth of the gear wheels (82, 84) from outside (Figs.1 to 11).

3. Coupling according to claim 1, characterised in that the coupling teeth (48) fit into the gaps between the teeth of the gear wheels (182, 184) from inside (Figs.12 and 13).

4. Coupling according to claim 1, 2 or 3, characterised in that the row of teeth of the coupling toothed rim (90) is formed by a zig-zag metal sheet (80).

5. Coupling according to claim 1, 2, 3 or 4, characterised in that the row of teeth of the coupling toothed rim (90) has blank areas (122) (Fig. 7).

6. Coupling according to claim 5, characterised in that the blank areas (122) are arranged at equal distances apart.

7. Coupling according to claim 1, 2, 3, 4, 5 or 6, characterised in that the row of teeth of at least one gear wheel (82, 84) is formed by a zig-zag metal sheet (180) which is non-rotatably fixed on the associated shaft (31) or coupling hub (Fig. 10 or 11).

8. Coupling according to claim 7, characterised in that the zig-zag metal sheet (180) is closed and is fixed by being mounted with an initial tension on the shaft (31) or coupling hub, and wedge shaped elements (32) are arranged between the zig-zag sheet (180) and the shaft (31) or coupling hub, the profile of which elements is adapted both to the gaps between the teeth of the zig-zag sheet (180), and to the surface of the shaft (31) or coupling hub (Fig. 10).

9. Coupling according to claim 7, characterised in that the surface of the shaft (31) or coupling hub has rounded notches (126) extending in the axial direction, in which the edges (34) of the zig-zag sheet (180) are seated (Fig. 11).

**Revendications**

1. Accouplement élastique comprenant deux roues dentées semblables (82, 84; 182, 184) montées sur des bouts d'arbres, ainsi qu'une couronne de dents d'accouplement (90, 190) qui recouvre les deux roues dentées et qui est en appui contre une surface interne ou une surface externe d'un manchon (120, 220), et dont les dents d'accouplement (48) sont formées par une tôle qui est pliée conformément à la forme des creux de denture des roues dentées (82, 84; 182, 184) et s'engage dans les creux de denture, les dents d'accouplement (48) et les dents des roues dentées (82, 84; 182, 184) présentant le même pas angulaire ainsi que les flancs de dents plans, et les rangées de dents des roues dentées (82, 84; 182, 184) étant juxtaposées dans la direction axiale, caractérise en ce que l'angle de flanc des roues dentées (82, 84; 182, 184) est plus grand que l'angle de frottement (tangente $\rho = \mu$), de sorte que, en présence d'une variation de la charge, les dents d'accouplement (48) glissent dans la direction radiale par leurs flancs de dents (148, 146) le long des flancs de dents (118, 116) qui leur sont adjacents.

2. Accouplement selon la revendication 1, caractérise en ce que les dents d'accouplement (48) s'engagent de l'extérieur dans les creux de denture des roues dentées (82, 84) (Figures 1 à 11).

3. Accouplement selon la revendication 1, <u>caractérisé en ce que</u> les dents d'accouplement (48) s'engagent de l'intérieur dans les creux de denture des roues dentées (182, 184) (Figures 12 et 13).

4. Accouplement selon l'une des revendications 1, 2 et 3, <u>caractérisé en ce que</u> la rangée de dents de la couronne de dents d'accouplement (90) est constituée par une tôle en zig-zag (80).

5. Accouplement selon l'une des revendications 1, 2, 3 et 4, <u>caractérisé en ce que la rangée de dents de la couronne de dents d'accouplement (90) présente des zones lacunaires (122) (Figure 7).</u>

6. Accouplement selon la revendication 5, <u>caractérisé en ce que</u> les zones lacunaires (122) sont équidistantes.

7. Accouplement selon l'une des revendications 1, 2, 3, 4, 5 ou 6, <u>caractérisé en ce que</u> la rangée de dents d'au moins une roue dentée (82, 84) est formée par une tôle en zig-zag (180) qui est fixée solidairement en rotation sur l'arbre (31) ou sur le moyeu d'accouplement correspondant (Figure 10 ou 11).

8. Accouplement selon la revendication 7, <u>caractérisé en ce que</u> la tôle en zig-zag (180) est fermée et <u>en ce que</u>, pour la fixation, elle est montée avec précontrainte sur l'arbre (31) ou le moyeu d'accouplement, cependant que, entre la tôle en zig-zag (180) et l'arbre (31) ou le manchon d'accouplement, sont disposés des éléments en forme de coin dont le profil est adapté aux creux de denture de la tôle en zig-zag (180) et à la surface de l'arbre (31) ou du moyeu d'accouplement (Figure 10).

9. Accouplement selon la revendication 7, <u>caractérisé en ce que</u> l'arbre (31) ou le moyeu d'accouplement présente sur sa surface des encoches arrondies (126) qui s'étendent dans la direction axiale et dans lesquelles se logent les arêtes (34) de la tôle en zig-zag (180) (Figure 11).

FIG. 1

FIG. 2

FIG.3

FIG.4

FIG.5

FIG.6

FIG. 7

FIG. 8

FIG. 9

FIG. 10

FIG.11

FIG. 12

XIII

182  274  276  184

142  144

80  247

220

190

XIII

FIG. 13

276  144

80

48

190

220